Europäisches Patentamt

European Patent Office

Office européen des brevets

(11) Veröffentlichungsnummer: **0 461 602 A1**

# (12) EUROPÄISCHE PATENTANMELDUNG

(21) Anmeldenummer: **91109531.3**

(22) Anmeldetag: **11.06.91**

(51) Int. Cl.5: **B60R 22/40**

(30) Priorität: **12.06.90 DE 4018799**

(43) Veröffentlichungstag der Anmeldung:
**18.12.91 Patentblatt 91/51**

(84) Benannte Vertragsstaaten:
**DE ES FR GB IT SE**

(71) Anmelder: **TRW REPA GMBH**
**Industriestrasse 20**
**W-7077 Alfdorf(DE)**

(72) Erfinder: **Hönl, Wolf-Dieter**
**Erdbeerweg 1**
**W-7079 Böbingen(DE)**
Erfinder: **Fischer, Thomas**
**Engelhofen 30**
**W-7154 Sontheim(DE)**

(74) Vertreter: **Degwert, Hartmut, Dipl.-Phys. et al**
**Patent Attorneys Prinz, Leiser, Bunke &**
**Partner Manzingerweg 7**
**W-8000 München 60(DE)**

(54) **Gurtaufroller für Sicherheitsgurte in Fahrzeugen.**

(57) Der notfallsperrende Blockiermechanismus des Gurtaufroller ist mit einem sensorgesteuerten Elektromagneten (32) versehen, in dessen erregtem Zustand eine Steuerklinke (30) außer Eingriff mit der Verzahnung einer Steuerscheibe (18) gehalten wird. Im aberregten Zustand des Elektromagneten (32) wird die Steuerklinke (30) durch Federkraft in Eingriff mit der Verzahnung der Steuerscheibe (18) bewegt. Um bei einem Stromausfall ein Anlegen des Sicherheitsgurtes zu ermöglichen, wird der Gurtbandwickel mittels eines Tasthebels (36) abgetastet, der über eine Blattfeder (40) an der Steuerklinke (30) angreift. Während des Anlegevorganges wird der Elektromagnet (32) durch einen Schalter (50) im erregten Zustand gehalten, so daß eine vorübergehende Unterbrechung des Anlegevorganges nicht zu einer Blockierung führt.

Fig.1

Die Erfindung betrifft einen Gurtaufroller für Sicherheitsgurte in Fahrzeugen, mit einem notfallsperrenden Blockiermechanismus, der eine außenverzahnte, relativ zur Gurtspule verdrehbare Steuerscheibe und eine mit dieser zusammenwirkende Steuerklinke aufweist, die durch einen sensorgesteuerten Elektromagneten in dessen erregtem Zustand außer Eingriff mit der Verzahnung der Steuerscheibe gehalten wird und bei aberregtem Elektromagnet durch Federkraft in Eingriff mit der Verzahnung bewegt wird.

Gurtaufroller dieser Art sind beispielsweise zur Verwendung an Fahrzeugsitzen geeignet, da ihre Orientierung im Raume unkritisch ist, so daß auch eine Integration in Sitzlehnen möglich ist, deren Neigungswinkel verstellbar ist. Zur Ansteuerung des Elektromagneten kann ein zentraler fahrzeugsensitiver Sensor verwendet werden, der im Stromkreis des Elektromagneten liegt und diesen unterbricht, sobald eine vorbestimmte Auslösebedingung erfüllt ist. Aus Sicherheitsgründen wird verlangt, daß der Blockiermechanismus bei einem Stromausfall aktiviert wird. Aus diesem Grunde wird die Steuerklinke bei aberregtem Elektromagnet durch Federkraft in Eingriff mit der Verzahnung bewegt.

Es ist infolgedessen aber bei einem Stromausfall oder nicht eingeschalteter Zündung auch nicht möglich, den Sicherheitsgurt anzulegen: Da der Blockiermechanismus aktiviert ist, erfolgt bereits nach wenigen Winkelgraden der Drehbewegung der Gurtspule in Abrollrichtung die vollständige Gurtspulenblockierung.

Der Erfindung liegt die Aufgabe zugrunde, ohne Beeinträchtigung der Sicherheit, die durch selbsttätige Aktivierung des Blockiermechanismus bei Stromausfall gegeben ist, das Anlegen des Sicherheitsgurtes auch bei mangels Stromzufuhr aberregtem Elektromagneten zu ermöglichen.

Diese Aufgabe wird bei einem Gurtaufroller der eingangs angegebenen Art erfindungsgemäß dadurch gelöst, daß ein am Gurtbandwickel anliegender Tasthebel über ein an diesen angeschlossenes Teil an der Steuerklinke angreift und diese ab einem bestimmten Wickeldurchmesser außer Eingriff mit der Verzahnung der Steuerscheibe hält und daß der Tasthebel einen im Stromkreis des Elektromagneten liegenden Schalter steuert, der während des Anlegens des Gurtes durch den Benutzer den Elektromagneten unter Strom setzt. Bei nicht angelegtem Sicherheitsgurt ist dieser vollständig auf der Gurtspule aufgewickelt, so daß der Gurtbandwickel seinen maximalen Durchmesser aufweist. In diesem Zustand kann eine Aktivierung des Blockiermechanismus nicht sinnvoll sein. Die Erfindung nutzt die sich aus diesem Umstand ergebende Möglichkeit, eine effektive Aktivierung des Blockiermechanismus jedenfalls dann zu verhindern, wenn das Gurtband vollständig auf der Gurtspule aufgewickelt ist. Während des Anschnallvorganges sorgt der dann geschlossene Schalter dafür, daß bei vorübergehendem Zurücklassen von Gurtband - wenn also das Anlegen kurzzeitig unterbrochen wird - die Blockierfunktion ausgeschlossen bleibt, bis der Anlegevorgang abgeschlossen ist.

Durch die bevorzugte Verwendung eines federelastischen Teils, über das der Tasthebel an der Steuerklinke angreift, wird auf einfache Weise eine Wirkverbindung hergestellt, durch die die Steuerklinke über einen größeren Verschwenkungswinkel des Tasthebels außer Eingriff mit der Verzahnung der Steuerscheibe gehalten wird.

Gemäß einer vorteilhaften Weiterbildung der Erfindung ist der schwenkbar gelagerte Tasthebel drehfest mit einem Steuerhebel verbunden, der ein Kurvenfolgerelement trägt. Ferner ist ein Schlepphebel reibungsschlüssig an die Gurtspule angekoppelt und weist eine Steuerkulisse auf, entlang welcher das Kurvenfolgerelement gleitbeweglich ist. Die Steuerkulisse bildet eine Steuerkurve. Diese Steuerkurve besitzt einen zur Gurtspule koaxialen, bogenförmigen Abschnitt und einen von dessen Ende ausgehenden, schräg zur Radialrichtung einwärts verlaufenden Abschnitt. Die Steuerkurve ist also von solcher Gestalt, daß bei Drehung der Gurtspule in Abwickelrichtung der Tasthebel unabhängig vom Durchmesser des Gurtbandwickels die Steuerklinke außer Eingriff mit der Verzahnung der Steuerscheibe hält und bei anschließender Rückdrehung der Gurtspule in Aufrollrichtung über einen kleinen Drehwinkel der Tasthebel freigegeben wird und seinerseits die Steuerklinke freigibt. Infolgedessen wird die Aktivierung des Blockiermechanismus auch bei Erreichen eines relativ kleinen Durchmessers des Gurtbandwickels so lange verhindert, bis die Drehung der Gurtspule in Abrollrichtung beim Anlegen des Sicherheitsgurtes unterbrochen wird und eine Rückdrehung der Gurtspule in Aufrollrichtung eintritt.

Wenn bei stromlosem Elektromagnet der Anlegevorgang durch eine kurze Rückdrehung der Gurtspule unterbrochen wird und ein bestimmter Durchmesser des Gurtbandwickels unterschritten ist, kann eine Aktivierung des Blockiermechanismus erfolgen, so daß der Anlegevorgang nicht fortgesetzt werden kann. Um auch diesen unerwünschten Effekt zu vermeiden, ist gemäß einer Weiterbildung der Erfindung vorgesehen, daß der Tasthebel einen im Stromkreis des Elektromagneten liegenden Schalter steuert, der ab einem bestimmten Durchmesser des Gurtbandwickels den Elektromagneten unter Strom setzt.

Weitere Merkmale und Vorteile der Erfindung ergeben sich aus der folgenden Beschreibung einer bevorzugten Ausführungsform und aus der Zeichnung, auf die Bezug genommen wird.

In der Zeichnung zeigen:

Fig. 1 eine schematische Seitenansicht des Gurtaufrollers;

Fig. 2 eine schematische Teilansicht des Gurtaufrollers mit Blickrichtung senkrecht zur Achse der Gurtspule; und

Fig. 3 eine Skizze zur Veranschaulichung der Funktionsweise.

In einem Gehäuse 10 des Gurtaufrollers ist eine Gurtspule 12 drehbar gelagert. Auf der Gurtspule 12 wird das Gurtband 14 aufgewickelt. Auf einem seitlichen Fortsatz 16 der Gurtspule 12 ist eine Steuerscheibe 18 begrenzt drehbar gelagert. Die Steuerscheibe 18 ist an ihrem Außenumfang mit einer Verzahnung 20 versehen. Am äußeren Ende des Fortsatzes 16 der Gurtspule 12 ist eine Scheibe 22 befestigt. Den Außenumfang der Scheibe 22 umgreifen zwei bogenförmige Arme 24, 26 eines Schlepphebels 28. Mittels dieser Arme 24, 26 ist der Schlepphebel 28 reibschlüssig an die Gurtspule 12 angekoppelt.

Mit der Verzahnung 20 der Steuerscheibe 18 wirkt eine am Gehäuse 10 schwenkbar gelagerte Steuerklinke 30 zusammen. Die Steuerklinke 30 bildet zugleich den Anker eines Elektromagneten 32. Im erregten Zustand des Elektromagneten 32 wird die Steuerklinke 30 außer Eingriff mit der Verzahnung 20 der Steuerscheibe 18 gehalten. Bei aberregtem Elektromagneten 32 wird die Steuerklinke 30 durch eine Druckfeder 34 in Eingriff mit der Verzahnung 20 verschwenkt.

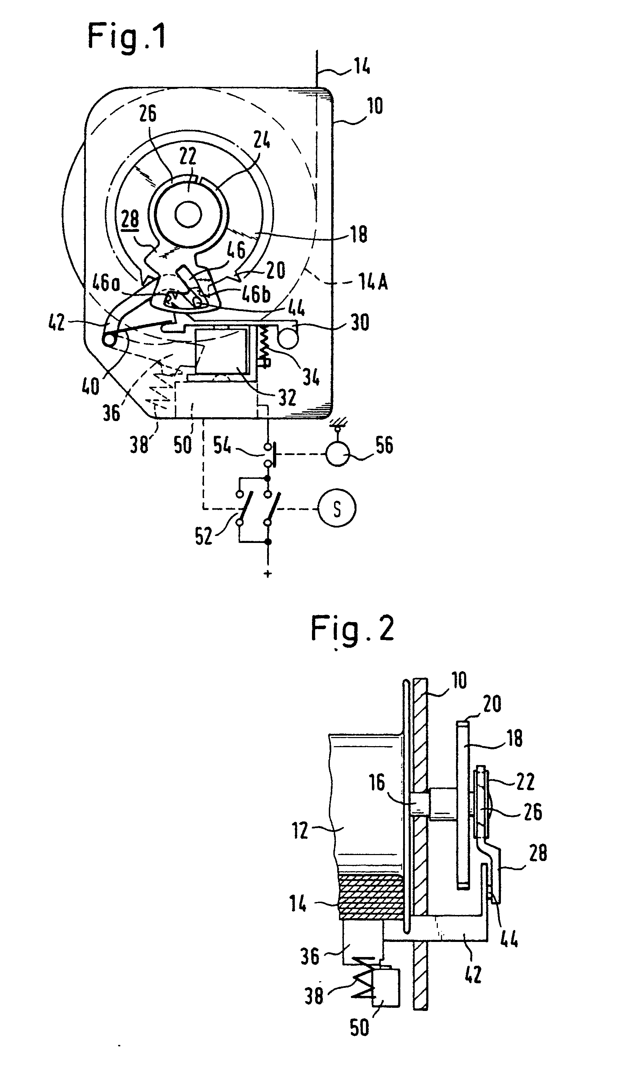

Der Außendurchmesser des Gurtbandwickels 14A wird durch einen schwenkbar am Gehäuse 10 gelagerten Tasthebel 36 abgetastet. Der Tasthebel 36 wird durch eine Druckfeder 38 zum Gurtbandwickel hin belastet. An dem Tasthebel 36 ist ferner eine Blattfeder 40 befestigt, die mit ihrem freien Ende an der Steuerklinke 30 angreift, um diese außer Eingriff mit der Verzahnung 20 der Steuerscheibe 18 zu halten, wenn der Tasthebel sich in der in Fig. 1 gezeigten Stellung befindet, die etwa dem maximalen Durchmesser des Gurtbandwickels 14A entspricht. Mit dem Tasthebel 36 ist ein Steuerhebel 42 drehfest verbunden. Der Steuerhebel 42 trägt an seinem freien Ende ein Kurvenfolgerelement 44, das in eine Steuerkulisse 46 des Schlepphebels 28 eingreift und entlang der durch diese Steuerkulisse 46 gebildeten Steuerkurve geführt wird. Diese Steuerkulisse 46 weist einen ersten, bogenförmigen und zur Gurtspule koaxialen Abschnitt sowie einen sich von dessen einem Ende schräg zur Radialrichtung einwärts erstreckenden zweiten Abschnitt auf. Die Steuerkulisse 46 ist annähernd V-förmig.

Der Tasthebel 36 steuert ferner einen elektrischen Schalter 50, der im Stromkreis des Elektromagneten 32 liegt. Durch Betätigung dieses Schalters 50 bei Erreichen eines bestimmten Durchmessers des Gurtbandwickels 14A wird der Elektromagnet 32 unter Strom gesetzt, um die Steuerklinke 30 außer Eingriff mit der Verzahnung 20 der Steuerscheibe 18 zu halten. Wie in Fig. 1 schematisch dargestellt ist, betätigt der Schalter 50 einen Schaltkontakt 52, der parallel zu einem mit "S" bezeichneten Zündschloßkontakt liegt. In Reihe mit diesen beiden Schaltkontakten liegt ein weiterer, im Normalzustand geschlossener Schaltkontakt 54, der durch einen fahrzeugsensitiven Sensor 56 betätigt wird. Dieser Sensor 56 ist schematisch als Pendel dargestellt, kann aber bei praktischen Ausführungsformen als dem Schaltkontakt unmittelbar zugeordnete Trägheitsmasse ausgebildet sein.

Bei dem in Fig. 1 gezeigten Zustand ist das Gurtband 14 zumindest nahezu vollständig auf der Gurtspule 12 aufgewickelt. Der Tasthebel 36 hält über die Blattfeder 40 die Steuerklinke 30 außer Eingriff mit der Verzahnung 20 der Steuerscheibe 18, so daß der durch diese in herkömmlicher Weise angesteuerte Blockiermechanismus des Gurtaufrollers nicht aktiviert werden kann. Folglich kann auch bei aberregtem Elektromagneten 32 Gurtband 14 abgerollt werden, um den Sicherheitsgurt anzulegen. Damit nun bei kleiner werdendem Außendurchmesser des Gurtbandwickels 14A die Sperrung der Blockierfunktion erhalten bleibt, wird der Tasthebel 36 über den Steuerhebel 42 im Verlaufe des Abrollvorganges in seiner Stellung gehalten, die etwa dem maximalen Durchmesser des Gurtbandwickels 14A entspricht. Bei einer Drehung der Gurtspule 12 in Abrollrichtung wird nämlich der Schlepphebel 28 über die federelastischen Arme 24, 26 durch Reibungsschluß mit der Scheibe 22 mitgedreht, bis das Kurvenfolgerelement 44 an dem einen Ende 46a der Steuerkulisse 46 anstößt. Da die Steuerkulisse in diesem Bereich radial nach innen begrenzt ist, kann keine Verschwenkung des Steuerhebels 42 und folglich des Tasthebels 36 radial einwärts erfolgen.

Wenn nun die zum Anlegen des Sicherheitsgurtes erforderliche Gurtbandlänge vom Gurtbandwickel 14 abgezogen ist, tritt in der Praxis stets eine geringfügige Rückdrehung der Gurtspule um einige Winkelgrade auf. Der Schlepphebel 28 wird bei dieser Rückdrehung der Gurtspule 12 mitgenommen, bis das Kurvenfolgerelement 44 an dem gegenüberliegenden Ende 46b des bogenförmigen Abschnitts der Steuerkulisse 46 anstößt. In diesem Bereich geht die Steuerkulisse in den radial einwärts gerichteten Abschnitt über. Das Kurvenfolgerelement 44 kann daher unter der Wirkung der Druckfeder 38 radial einwärts ausweichen, so daß der Steuerhebel 42 und folglich auch der Tasthebel 36 radial einwärts verschwenkt werden. Die Blattfeder 40 gibt nunmehr die Steuerklinke 30 frei, die unter der Wirkung der Druckfeder 34 in Eingriff mit der Verzahnung 20 bewegt wird, wenn nicht der Elektromagnet 32 unter Strom gesetzt und erregt wird.

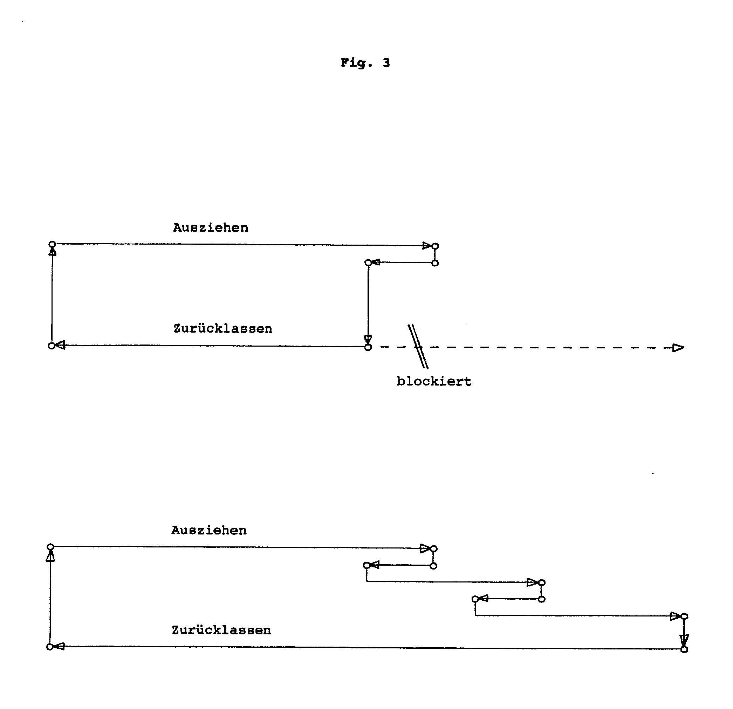

Bei intakter Stromversorgung, aber geöffnetem Zündschalterkontakt S kann der Elektromagnet 32 über den Schaltkontakt 52 erregt werden, um eine Aktivierung des Blockiermechanismus zu verhindern. Die Betätigung des Schaltkontaktes 52 über den Schalter 50 erfolgt auf einem bestimmten Außendurchmesser des Gurtbandwickels 14A. Bei einem unterbrochenen Anlegevorgang wird, wenn ein bestimmter Durchmesser des Gurtbandwickels unterschritten ist, der Blockiermechanismus aktiviert, wenn nicht der Elektromagnet 32 durch Betätigung des Schaltkontaktes 52 unter Strom gesetzt wird. Durch das Vorhandensein dieses Schalters 50 wird aber ein Anlegevorgang auch dann ermöglicht, wenn der Anlegevorgang zuvor abgebrochen wurde oder nicht stetig zu Ende geführt wird. Der Schalter 50 bleibt während des gesamten Anlegevorganges betätigt. Die Fig. 3 veranschaulicht in dem oberen Diagramm den Anlegevorgang ohne den Schalter 50, im unteren Diagramm den gleichen Vorgang bei geschlossenem Schalter 50.

**Patentansprüche**

1. Gurtaufroller für Sicherheitsgurte in Fahrzeugen, mit einem notfallsperrenden Blockiermechanismus, der eine außenverzahnte, relativ zur Gurtspule (12) verdrehbare Steuerscheibe (18) und eine mit dieser zusammenwirkende Steuerklinke (30) aufweist, die durch einen sensorgesteuerten Elektromagneten (32) in dessen erregtem Zustand außer Eingriff mit der Verzahnung der Steuerscheibe (18) gehalten wird und bei aberregtem Elektromagnet (32) durch Federkraft in Eingriff mit der Verzahnung bewegt wird, dadurch gekennzeichnet, daß ein am Gurtbandwickel (14A) anliegender Tasthebel (36) über ein an diesen angeschlossenes Teil (40) an der Steuerklinke (30) angreift und diese ab einem bestimmten Wickeldurchmesser außer Eingriff mit der Verzahnung (20) der Steuerscheibe (18) hält und daß der Tasthebel (36) einen im Stromkreis des Elektromagneten liegenden Schalter (50) steuert, der während des Anlegens des Gurtes durch den Benutzer den Elektromagneten (32) unter Strom setzt.

2. Gurtaufroller nach Anspruch 1, dadurch gekennzeichnet, daß der schwenkbar gelagerte Tasthebel (36) drehfest mit einem Steuerhebel (42) verbunden ist, welcher ein Kurvenfolgerelement (44) trägt, daß ein Schlepphebel (28) reibungsschlüssig an die Gurtspule (12) angekoppelt ist und eine Steuerkulisse (46) aufweist und daß das Kurvenfolgerelement (44) entlang der durch die Steuerkulisse (44) gebildeten Steuerkurve beweglich ist, wobei die Steuerkurve von solcher Gestalt ist, daß bei Drehung der Gurtspule (12) in Abwickelrichtung der Tasthebel (36) unabhängig vom Durchmesser des Gurtbandwickels (14A) die Steuerklinke (30) außer Eingriff mit der Verzahnung (20) der Steuerscheibe (18) hält und bei anschließender Rückdrehung der Gurtspule (12) in Aufrollrichtung über einen kleinen Drehwinkel der Tasthebel (36) freigegeben wird und seinerseits die Steuerklinke (30) freigibt.

3. Gurtaufroller nach Anspruch 1 oder 2, dadurch gekennzeichnet, daß der Tasthebel (36) durch Federkraft (38) gegen den Gurtbandwickel (14A) belastet ist.

4. Gurtaufroller nach einem der vorstehenden Ansprüche, dadurch gekennzeichnet, daß der Tasthebel (36) über eine Blattfeder (40) an der Steuerklinke (30) angreift.

# Fig.1

# Fig.2

Fig. 3

Ausziehen

Zurücklassen

blockiert

Ausziehen

Zurücklassen

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | DE-A-2 809 395  (AUTOFLUG GMBH)<br>* Seite 8, Zeile 2 - Seite 10, Zeile 16; Figuren 1-3 *<br>— — — | 1,3,2,4 | B 60 R 22/40 |
| A | FR-A-2 323 406  (KANGOL MAGNET LTD)<br>* das ganze Dokument *<br>— — — | 1 | |
| Y | US-A-3 632 059  (WINFIELD WARREN LOOSE)<br>* Spalte 3, Zeile 67 - Spalte 5, Zeile 11; Figuren 10-12 *<br>— — — | 2 | |
| Y | US-A-3 724 773  (ROBERT C. FISHER)<br>* Spalte 2, Zeilen 18 - 21; Figur 1 *<br>— — — | 4 | |
| A | US-A-3 836 171  (HAYASHI ET AL.)<br>* Spalte 7, Zeile 47 - Spalte 10, Zeile 5; Figuren 12-17 *<br>— — — | 1-3 | |
| A | US-A-3 890 003  (CLOSE)<br>* Spalte 3, Zeile 12 - Spalte 7, Zeile 30; Figuren 1-8 *<br>— — — — — | 1-3 | |
| | | | **RECHERCHIERTE SACHGEBIETE (Int. Cl.5)**<br><br>B 60 R |

**Der vorliegende Recherchenbericht wurde für alle Patentansprüche erstellt**

| Recherchenort | Abschlußdatum der Recherche | Prüfer |
|---|---|---|
| Den Haag | 18 September 91 | DUBOIS B.F.J. |